# EUROPÄISCHE PATENTSCHRIFT

(11) **EP 3 218 234 B1**
(45) Veröffentlichungstag und Bekanntmachung des Hinweises auf die Patenterteilung: **24.10.2018**
(21) Anmeldenummer: 15790972.2
(22) Anmeldetag: 09.11.2015
(51) Int. Cl.: B60S 1/38, B29C 45/26, B60S 1/34

(54) **FINRAY-WISCHER MIT ENTFORMOPTIMIERTER FLEXOSTRUKTUR**
FIN RAY-TYPE WIPER COMPRISING A FLEXIBLE STRUCTURE OPTIMIZED FOR DEMOLDING
ESSUIE-GLACE FINRAY PRÉSENTANT UNE FLEXOSTRUCTURE À DÉFORMATION OPTIMISÉE

(30) Priorität: 11.11.2014 DE 102014222971
(43) Veröffentlichungstag der Anmeldung: 20.09.2017
(73) Patentinhaber: Robert Bosch GmbH, 70442 Stuttgart (DE)
(72) Erfinder: MERZ, Jochen, 72348 Rosenfeld - Isingen (DE); WEILER, Michael, 77815 Buehl (DE); NAFZ, Hartmut, 78586 Deilingen (DE)
(86) Internationale Anmeldenummer: PCT/EP2015/076004
(87) Internationale Veröffentlichungsnummer: WO 2016/075057

(56) Entgegenhaltungen:
- DE-A1-102013 214 064
- US-A- 3 131 414
- US-B1- 6 301 742

## Beschreibung

Die Erfindung betrifft eine Scheibenwischvorrichtung für ein Fahrzeug, insbesondere ein Kraftfahrzeug bzw. ein Verfahren zur Herstellung eines Wischblatts für eine Scheibenwischvorrichtung.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischarm über eine Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben, zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es ein Bedürfnis, Scheibenwischvorrichtungen weiter zu verbessern. DE-A-102013214064 offenbart den Oberbegriff des Anspruchs 1.

Bei der Verbesserung gibt es eine Mehrzahl von Randbedingungen, die zusätzlich berücksichtigt werden sollten. Dabei ist es auch ein Bedürfnis, eine einfache und kostengünstige Herstellung des Wischblatts sicherzustellen.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten, wobei die Herstellung des Wischblatts vereinfacht ist.

Diese Aufgabe wird gelöst durch eine Scheibenwischvorrichtung mit den Merkmalen gemäß Anspruch 1. Ferner wird die Aufgabe gelöst durch ein Verfahren zur Herstellung eines Wischblatts gemäß Anspruch 8.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Insbesondere sind die Verbindungselemente ausgelegt, um eine Bewegung des Oberteils und des Unterteils relativ zueinander mit einer Bewegungskomponente entlang der Längserstreckung des Wischblatts zu ermöglichen. Die Verbindungselemente sind derart ausgelegt, dass sie sich jeweils entlang einer Längsachse des betreffenden Verbindungselements, welche von dem Oberteil zu dem Unterteil verläuft, jeweils entlang einer zu der Längsachse senkrecht verlaufenden Querachse erstrecken. Hierbei schließen die Querachsen von mindestens zwei entlang der Längserstreckung benachbarten Verbindungselementen zueinander einen Entformwinkel von mindestens 0,5° ein.

Gemäß einer weiteren Ausführungsform der vorliegenden Erfindung wird ein Verfahren zur Herstellung eines Wischblatts für eine Scheibenwischvorrichtung für ein Fahrzeug, insbesondere ein Kraftfahrzeug, vorgeschlagen. Das Verfahren umfasst die Bereitstellung eines Spritzgießwerkzeugs, geeignet zum Spritzgießen des Wischblatts, wobei das Wischblatt ein langgestrecktes Oberteil, ein langgestrecktes Unterteil und mehrere Verbindungselemente zum Verbinden des Oberteils und des Unterteils aufweist, wobei die Verbindungselemente entlang einer Längserstreckung des Wischblatts voneinander beabstandet sind und insbesondere an dem Oberteil und/oder an dem Unterteil mittels eines Drehgelenks angebracht sind. Die Verbindungselemente erstrecken sich jeweils entlang einer Längsachse des Verbindungselements, welche von dem Oberteil zu dem Unterteil verläuft, und entlang einer zu der Längsachse senkrecht verlaufenden Querachse, wobei die Querachsen von mindestens zwei entlang der Längserstreckung benachbarten Verbindungselementen zueinander einen Entformwinkel von mindestens 0,5° einschließen. Ferner erfolgen ein Spritzgießen des Wischblatts unter Verwendung des mit dem Entformwinkel versehenen Spritzgießwerkzeugs und ein Entformen des Wischblatts aus dem Spritzgießwerkzeug.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtung für Fahrzeuge auf besonders günstige Weise und für eine Mehrzahl unterschiedlicher Einsatzgebiete hergestellt werden. Insbesondere kann bei einem Spritzgießen des Wischblatts ein Entformen verbessert werden.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Insbesondere sind die Verbindungselemente ausgelegt, um eine Bewegung des Oberteils und des Unterteils relativ zueinander mit einer Bewegungskomponente entlang einer Längserstreckung des Wischblatts zu ermöglichen. Die Verbindungselemente sind ferner derart ausgelegt, dass sie sich jeweils entlang einer Längsachse des betreffenden Verbindungselements, welche von dem Oberteil zu dem Unterteil verläuft, und jeweils entlang einer zu der Längsachse senkrecht verlaufenden Querachse erstrecken und eine vorgegebene Wandstärke aufweisen. Hierbei schließen die Querachsen von mindestens zwei entlang der Längserstreckung benachbarten Verbindungselementen zueinander einen Entformwinkel von mindestens 0,5° ein.

Gemäß einer weiteren Ausführungsform der vorliegenden Erfindung wird ein Verfahren zur Herstellung eines Wischblatts für eine Scheibenwischvorrichtung für ein Fahrzeug, insbesondere ein Kraftfahrzeug, vorgeschlagen. Das Verfahren umfasst ein Bereitstellen eines Spritzgießwerkzeugs, geeignet zum Spritzgießen des Wischblatts, wobei das Wischblatt ein langgestrecktes Oberteil, ein langgestrecktes Unterteil und mehrere Verbindungselemente zum Verbinden des Oberteils und des Unterteils aufweist, wobei die Verbindungselemente entlang einer Längserstreckung des Wischblatts voneinander beabstandet und an dem Oberteil und/oder an dem Unterteil mittels eines Drehgelenks angebracht sind, wobei die Verbindungselemente jeweils entlang einer Längsachse des Verbindungselements, welche von dem Oberteil zu dem Unterteil verläuft, und entlang einer zu der Längsachse senkrecht verlaufenden Querachse ausgedehnt sind, wobei die Querachsen von mindestens zwei entlang der Längserstreckung benachbarten Verbindungselementen zueinander einen Entformwinkel von mindestens 0,5° einschließen. Ferner erfolgen ein Spritzgießen des Wischblatts unter Verwendung des mit dem Entformwinkel versehenen Spritzgießwerkzeugs und ein Entformen des Wischblatts aus dem Spritzgießwerkzeug.

Gemäß noch weiteren Ausführungsformen kann der Entformwinkel einen Wert in einem Bereich von 0,5° bis 45°, in typischer Weise einen Wert in einem Bereich von 1° und 10°, und insbesondere einen Wert von ungefähr 3° aufweisen. Durch eine derartige Einstellung des Entformwinkels ist es in zweckmäßiger Weise möglich, ein einfaches und kostengünstiges Entformen des Wischblatts aus einem für die Herstellung des Wischblatts bereitgestellten Spritzgießwerkzeug zu gewährleisten.

Gemäß noch weiteren Ausführungsformen können die Verbindungselemente zwischen dem Oberteil und dem Unterteil entlang der Längserstreckung des Wischblatts derart angeordnet sein, dass aufeinanderfolgende Verbindungselemente um ihre jeweiligen Längsachsen abwechselnd zum Wischblattkopf hin und von diesem weg verschwenkt sind. Hierdurch wird der Vorteil erzielt, dass eine Herstellung des Wischblatts mit einem besonders einfachen Spritzgießwerkzeug durchgeführt werden kann. Insbesondere ist es zweckmäßig, wenn die Verbindungselemente zwischen dem Oberteil und dem Unterteil entlang der Längserstreckung des Wischblatts wechselweise symmetrisch um ihre Längsachsen verschwenkt sind, derart, dass ein konstanter Entformwinkel zwischen den Querachsen benachbarter Verbindungselemente bereitgestellt wird.

Gemäß noch weiteren Ausführungsformen kann das Oberteil und/oder das Unterteil und/oder eines oder mehrere Verbindungselemente ein Material enthalten, welches aus der Gruppe gewählt ist, welche besteht aus einem Polymethylmethacrylat, einem Polymer, einem Faserverbundwerkstoff, Carbon, POM, PA, TPE (Thermoplastischem Elastomer), insbesondere TPE-S, TPE-O, TPE-U, TPE-A, TPE-V, TPE-E,..., oder jedweder Kombination davon. Auf diese Weise wird der Vorteil erzielt, dass durch eine geeignete Materialauswahl physikalische, wie etwa mechanische Eigenschaften des Wischarms bzw. von Komponenten des Wischblatts angepasst werden können. Ferner ist es möglich, Komponenten des Wischarms wie etwa den Wischblattkopf oder das Wischblatt als integrale Bauteile in Spritzguss auszuführen, wodurch fertigungstechnische Vorteile erzielt werden, die eine kostengünstige Herstellung der Scheibenwischvorrichtung zulassen. Insbesondere ist es vorteilhaft, wenn der Wischblattkopf zusammen mit dem Wischblatt als ein integrales Bauteil in Spritzguss ausgeführt wird.

Gemäß noch weiteren Ausführungsformen können die Verbindungselemente und/oder die Drehgelenke eine nahezu konstante Wandstärke aufweisen, wobei die Wandstärke in einem Bereich zwischen 0,3 mm und 5 mm, in typischer Weise in einem Bereich zwischen 0,5 mm und 3 mm, insbesondere bei ungefähr 2 mm liegt. Auf diese Weise wird der Vorteil erzielt, dass insgesamt ein Wischblatt zur Verfügung gestellt werden kann, das besonders gut nach dem "Finray" -Prinzip funktioniert.

Gemäß noch weiteren Ausführungsformen kann das Spritzgießen des Wischblatts unter Verwendung von plastifiziertem Kunststoff durchgeführt werden. Auf diese Weise wird eine besonders kostengünstige Herstellung des Wischblatts ermöglicht.

Gemäß noch weiteren Ausführungsformen kann das Spritzgießen des Wischblatts mit einem Spritzgießwerkzeug durchgeführt werden, welches trapezoide Entformblöcke aufweist. Hierdurch wird ein Wischblatt-Aufbau bereitgestellt, bei dem die Verbindungselemente zwischen dem Oberteil und dem Unterteil entlang der Längserstreckung des Wischblatts derart angeordnet sind, dass aufeinanderfolgende Verbindungselemente um ihre jeweiligen Längsachsen abwechselnd zum Wischblattkopf hin und von diesem weg verschwenkt sind. Dies kann in vorteilhafter Weise zur Vereinfachung bzw. Robustheit der Fertigung der Scheibenwischvorrichtung sowie zu weiteren Kostenverringerungen führen.

### Kurze Beschreibung der Zeichnungen

Ausführungsbeispiele der Erfindung sind in den Figuren dargestellt und werden im Folgenden näher beschrieben. Es zeigen:
Figur 1 eine perspektivische Darstellung eines Wischarms einer Scheibenwischvorrichtung, wobei der Wischarm einen Wischblattkopf und ein Wischblatt mit einer entformoptimierten Anordnung von Verbindungselementen aufweist, gemäß Ausführungsformen der Erfindung,
Figur 2 eine Teilansicht eines Spritzgießwerkzeugs in einer Spritzgießposition zur Herstellung des in Figur 1 dargestellten Wischblatts, gemäß Ausführungsformen der Erfindung,
Figur 3 Teilansichten des Spritzgießwerkzeugs und des hergestellten Wischblatts nach einem Entformen des Wischblatts aus dem Spritzgießwerkzeug, gemäß Ausführungsformen der Erfindung,
Figur 4 ein Diagramm zur Veranschaulichung eines Verfahrens zur Herstellung eines Wischblatts für eine Scheibenwischvorrichtung, gemäß Ausführungsformen der Erfindung,
Figur 5A eine schematische Darstellung eines weiteren Ausführungsbeispiels einer erfindungsgemäßen Scheibenwischvorrichtung in Form eines Wischarms mit integriertem Wischblatt in einer Grundstellung,
Figur 5B eine schematische Darstellung des Wischarms mit integriertem Wischblatt nach Figur 5A in einer an eine Scheibe angelegten Stellung,
Figur 6 eine schematische Darstellung eines Wischblatts gemäß Ausführungsformen vorliegenden Erfindung in einer Grundstellung, und
Figur 7 eine schematische Darstellung eines Wischblatts gemäß Ausführungsformen der vorliegenden Erfindung in einer an eine Scheibe angelegten Stellung.

### Ausführungsformen der Erfindung

Im Folgenden werden, sofern nicht anders vermerkt, für gleiche und gleichwirkende Elemente gleiche Bezugszeichen verwendet.

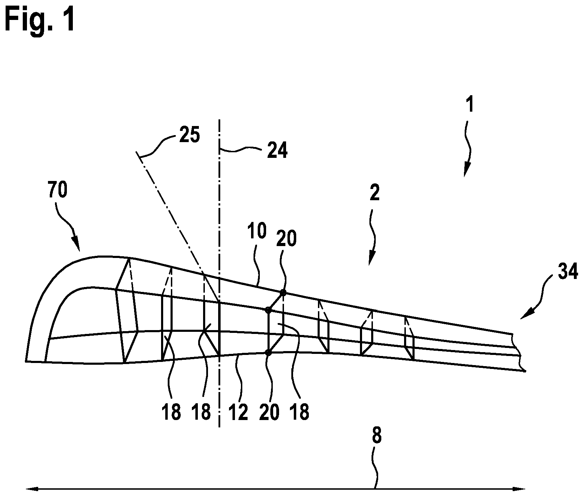

Figur 1 zeigt eine perspektivische Darstellung eines Wischarms 1 einer Scheibenwischvorrichtung, wobei der Wischarm 1 einen Wischblattkopf 70 und ein Wischblatt 2 mit einer entformoptimierten Anordnung von Verbindungselementen 18 aufweist, gemäß Ausführungsformen der Erfindung. Hierbei erstreckt sich das Wischblatt 2 von dem Wischblattkopf 70 zu einer Verbindungsposition 34.

Gemäß Ausführungsformen weist das Wischblatt 2 ein langgestrecktes Oberteil 10 und ein langgestrecktes Unterteil 12 auf, welche zumindest teilweise biegbar ausgestaltet sind, wobei das Unterteil 12 bei einem Betrieb der Scheibenwischvorrichtung einer Scheibe 4 zugewandt ist. Ferner sind mehrere Verbindungselemente 18 zum Verbinden des Oberteils 10 und des Unterteils 12 vorgesehen, wobei die Verbindungselemente 18 entlang einer Längserstreckung 8 des Wischblatts voneinander beabstandet und an dem Oberteil 10 und/oder dem Unterteil 12 mittels eines Drehgelenks 20 angebracht sind. Die Verbindungselemente 18 sind ausgelegt, um eine Bewegung des Oberteils 10 und des Unterteils 12 relativ zueinander mit einer Bewegungskomponente entlang der Längserstreckung 8 des Wischblatts 2 zu ermöglichen. Hierbei sind die Verbindungselemente an dem Oberteil 10 an einer jeweiligen oberen Verbindungsposition verbunden und an dem Unterteil 12 an einer jeweiligen unteren Verbindungsposition. Zum Beispiel ist an den Verbindungspositionen jeweils ein Drehgelenk 20 zur Verfügung gestellt. Bei einer Bewegung des Oberteils 10 und des Unterteil 12 relativ zueinander verändert sich der Abstand einer oberen Verbindungsposition zu einer unteren Verbindungsposition am selben Verbindungselement im Wesentlichen nicht, d.h. der Abstand ist mit Abweichungen von zum Beispiel ±1 mm, insbesondere ±0,3 mm konstant.

Die Verbindungselemente 18 sind an einander zugewandten inneren Längsseiten des Oberteils 10 und des Unterteils 12 durch die Drehgelenken bzw. Scharniere 20 befestigt. Besonders vorteilhaft für die Herstellung des Wischblatts 2 ist die Ausgestaltung der Drehgelenke 20 als Filmscharniere ausgebildet sein. Ausführungsformen, bei denen die Gelenke 20 durch Filmscharniere zur Verfügung gestellt sind, stellen somit eine sehr einfache Art und Weise zur Verfügung, um die Gelenke 20 für einen Fin-Ray-Wischer zur Verfügung zu stellen. Das Wischblatt 2 kann einteilig, insbesondere werkzeugfallend, zur Verfügung gestellt werden.

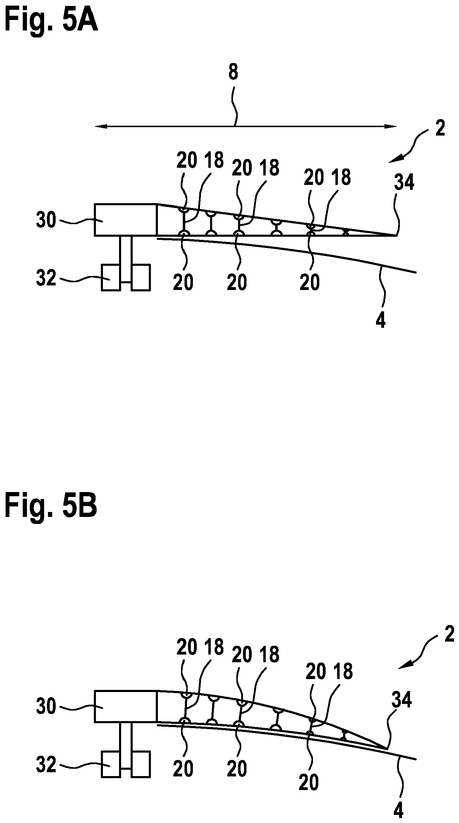

Entlang der Längserstreckung 8 des Wischblatts 2 wird der Abstand zwischen dem Oberteil 10 und dem Unterteil 12 ausgehend vom Wischblattkopf kleiner, zumindest in Bereichen der Längserstreckung 8 des Wischblatts 2 bzw. in einem überwiegenden Teil der Längserstreckung 8 des Wischblatts 2, siehe Figuren 5A, 5B, 6 und 7. Ausgehend vom Kopfende läuft die Höhe des Wischblatts 2 in Bereichen keilförmig zu bzw. wird in Bereichen der Längserstreckung 8 kleiner. Zum Beispiel kann gemäß Ausführungsformen für eine Mehrzahl der Verbindungselemente 18 die Länge der Verbindungselemente 18 derart zur Verfügung gestellt werden, dass die in der Nähe des Wischblattkopfs zur Verfügung gestellten Verbindungselemente 18 länger sind als die an der gegenüberliegenden Seite des Wischblatts 2 entlang der Längserstreckung 8. Der Wischblattkopf 70 kann an einer Antriebswelle angebracht sein, derart, dass eine Rotation des Wischarms 1 um eine Antriebsachse ermöglicht wird.

Durch diese Eigenschaften kann ein Wischblatt 2 zur Verfügung gestellt werden, das nach dem "Finray"-Prinzip funktioniert. Der "Finray"-Effekt wird untenstehend insbesondere unter Bezugnahme auf die Figuren 5A, 5B, 6 und 7 erläutert werden.

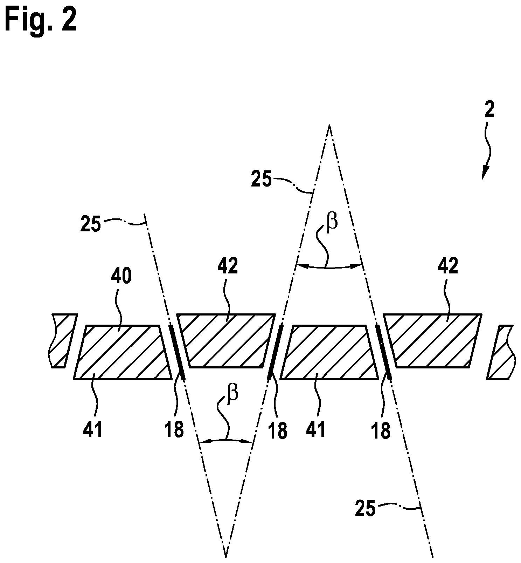

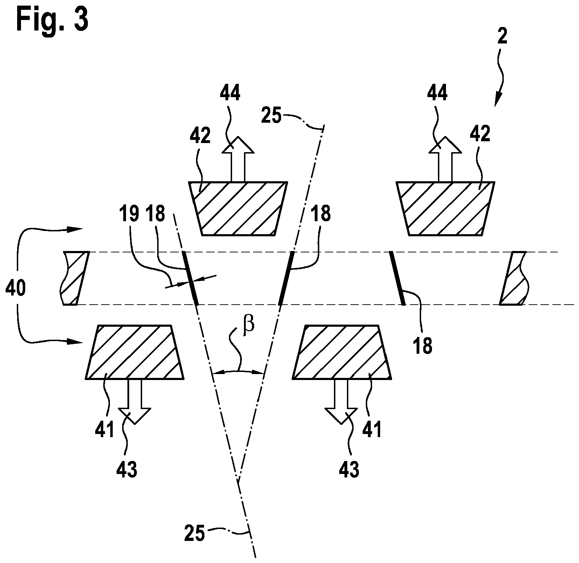

Die Figuren 2 und 3 betreffen die Herstellung eines Wischblatts 2 gemäß Ausführungsformen der Erfindung. Hierbei zeigt Figur 2 ist eine Teilansicht eines Spritzgießwerkzeugs 40 in einer Spritzgießposition zur Herstellung des in Figur 1 dargestellten Wischblatts 2, wobei das Wischblatt 2 in einer Ansicht von unten dargestellt ist, d.h. in einer Draufsicht auf das Unterteil 12 des Wischblatts 2 von unten bzw. in einer Ansicht, die einem Schnitt durch das Wischblatt 2 in einer zu der Scheibe 4 ungefähr parallelen Ebene entspricht. Figur 3 zeigt Teilansichten des in Figur 2 skizzierten Spritzgießwerkzeugs 40 und des hergestellten Wischblatts 2 nach einem Entformen des Wischblatts 2 aus dem Spritzgießwerkzeug 40. Figur 3 stellt ebenfalls eine Ansicht von unten bzw. eine Ansicht dar, die einem Schnitt durch das Wischblatt 2 in einer zu der Scheibe 4 ungefähr parallelen Ebene entspricht.

Wie an einem der Verbindungselemente 18 in Figur 1 beispielhaft dargestellt, sind die Verbindungselemente 18 derart aufgebaut, dass sie sich jeweils entlang einer Längsachse 24 des betreffenden Verbindungselements 18, welche von dem Oberteil 10 zu dem Unterteil 12 verläuft, und jeweils entlang einer zu der Längsachse 24 senkrecht verlaufenden Querachse 25 erstrecken und eine vorgegebene Wandstärke 19 aufweisen, siehe auch Figur 3. Hierbei schließen die Querachsen 25 von mindestens zwei entlang der Längserstreckung benachbarten Verbindungselementen zueinander einen in Figur 2 dargestellten Entformwinkel β ein, welcher von Null verschieden ist, insbesondere mindestens 0,5° beträgt.

Gemäß noch weiteren Ausführungsformen, welche mit hierin beschriebenen Ausführungsformen kombiniert werden können, kann der Entformwinkel β einen Wert in einem Bereich von 0,5° bis 45°, in typischer Weise einen Wert in einem Bereich von 2° und 15°, und insbesondere einen Wert von ungefähr 5° aufweisen. Hierdurch ergibt sich ein einfaches und kostengünstiges Entformen des Wischblatts 2 aus einem für die Herstellung des Wischblatts 2 bereitgestellten Spritzgießwerkzeug 40. Insbesondere können die Verbindungselemente 18 zwischen dem Oberteil 10 und dem Unterteil 12 entlang der Längserstreckung 8 des Wischblatts 2 derart angeordnet sein, dass aufeinanderfolgende Verbindungselemente 18 um ihre jeweiligen Längsachsen 8 abwechselnd zum Wischblattkopf 70 hin und von diesem weg verschwenkt sind. Hierdurch wird der Vorteil erzielt, dass eine Herstellung des Wischblatts 2 mit einem besonders einfachen Spritzgießwerkzeug 40, wie in den Figuren 2 und 3 dargestellt, erfolgen kann. Insbesondere ist es zweckmäßig, wenn die Verbindungselemente 18 zwischen dem Oberteil 10 und dem Unterteil 12 entlang der Längserstreckung 8 des Wischblatts 2 wechselweise symmetrisch um ihre Längsachsen 24 verschwenkt sind, derart, dass ein konstanter Entformwinkel β zwischen den Querachsen 25 benachbarter bzw. aufeinanderfogender Verbindungselemente 18 bereitgestellt wird.

In der Teilansicht der Figur 2, welche das Wischblatt 2 in einem Ausschnitt von unten zeigt, ist das Spritzgießwerkzeugs 40 in einer Spritzgießposition bzw. Abformposition dargestellt. Die Querachsen 25 benachbarter Verbindungselemente 18 weisen hierbei einen Winkel zueinander auf, d.h. den Entformwinkel β. Es sei hier darauf hingewiesen, dass Figur 2 nicht notwendigerweise maßstabsgetreu ist, d.h. der Entformwinkel β kann wesentlich kleiner sein als in Figur 2 dargestellt. Das Spritzgießwerkzeug 40 bzw. Entformwerkzeug weist zwei Reihen von Entformblöcken auf, d.h. erste Entformblöcke 41 und zweite Entformblöcke 42.

Wie in den Figuren 2 und 3 veranschaulicht, umfasst das Spritzgießwerkzeug 40 trapezoide Entformblöcke 41, 42, so dass durch einen bereitgestellten Trapezwinkel die gezeigte schräge Ausgestaltung der Verbindungselemente 18 ermöglicht wird. Durch eine derartige Auslegung des Spritzgießwerkzeugs 40 mit den trapezoiden Entformblöcken 41, 42 können in vorteilhafter Weise Verbindungselemente 18 bereitgestellt werden, welche eine gleichmäßige bzw. konstante Wandstärke 19, siehe Figur 3, aufweisen, wobei die Drehgelenke bzw. Filmscharniere 20 ebenfalls eine konstante Wandstärke aufweisen können.

Gemäß noch weiteren Ausführungsformen, welche mit hierin beschriebenen Ausführungsformen kombiniert werden können, können durch das beschriebene Herstellungsverfahren für ein Wischblatt 2 die Verbindungselemente 18 und/oder die Drehgelenke bzw. Scharniere bzw. Filmscharniere 20 eine nahezu konstante Wandstärke 19 aufweisen, wobei die Wandstärke 19 in einem Bereich zwischen 0,3 mm und 5 mm, in typischer Weise in einem Bereich zwischen 0,5 mm und 3 mm, insbesondere bei ungefähr 2 mm liegen kann. Auf diese Weise wird der Vorteil erzielt, dass insgesamt ein Wischblatt 2 zur Verfügung gestellt werden kann, das besonders gut nach dem "Finray" -Prinzip funktioniert.

Figur 3 zeigt Teilansichten des in Figur 2 skizzierten Spritzgießwerkzeugs 40 und des bereits hergestellten Wischblatts 2 nach einem Entformen des Wischblatts 2 aus dem Spritzgießwerkzeug 40, gemäß Ausführungsformen der Erfindung, wobei das Wischblatt 2 in einer Ansicht von unten dargestellt ist, d.h. in einer Draufsicht auf das Unterteil 12 des Wischblatts 2 von unten bzw. in einer Ansicht, die einem Schnitt durch das Wischblatt 2 in einer zu der Scheibe 4 ungefähr parallelen Ebene entspricht. Zum Erreichen der in Figur 3 veranschaulichten Situation wurde die erste Reihe von Entformblöcken 41 in einer ersten Entformungsrichtung 43 abgezogen, während die zweite Reihe von Entformblöcken 42 - gleichzeitig oder danach - in einer zweiten Entformungsrichtung 44 abgezogen wurde. Wie in Figur 3 dargestellt, bilden sich somit nach einem Entfernen des Spritzgießwerkzeugs 40 bzw. nach einem Entformen des Wischblatts 2 aus dem Spritzgießwerkzeugs 40 trapezförmige Fenster.

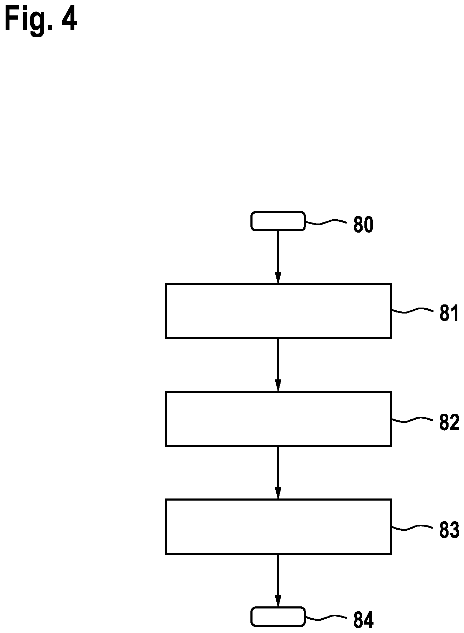

Figur 4 ist ein Diagramm zur Veranschaulichung eines Verfahrens zur Herstellung eines Wischblatts 2 für eine Scheibenwischvorrichtung, gemäß Ausführungsformen der Erfindung. Die Prozedur beginnt in einem Block 80. Anschließend wird in einem Block 81 ein Spritzgießwerkzeug 40 bereitgestellt, welches geeignet ist zum Spritzgießen des Wischblatts 2. Das zu fertigende Wischblatt 2 weist ein langgestrecktes Oberteil 10, ein langgestrecktes Unterteil 12 und mehrere Verbindungselemente 18 zum Verbinden des Oberteils 10 und des Unterteils 12 auf, wobei die Verbindungselemente 18 entlang der Längserstreckung 8 des Wischblatts 2 voneinander beabstandet und an dem Oberteil 10 und/oder an dem Unterteil 12 mittels eines Drehgelenks 20 angebracht sind. Die Verbindungselemente 18 sind jeweils entlang der Verbindungselement-Längsachse 24, welche sich von dem Oberteil 10 zu dem Unterteil 12 erstreckt, und entlang einer zu der Längsachse 24 senkrecht verlaufenden Querachse 25 ausgedehnt.

Die Querachsen 25 von mindestens zwei entlang der Längserstreckung 8 benachbarten Verbindungselementen 18 schließen zueinander einen Entformwinkel β von mindestens 0,5° ein. In einem Block 82 wird ein Spritzgießen des Wischblatts 2 unter Verwendung des mit dem Entformwinkel β versehenen Spritzgießwerkzeugs 40 bereitgestellt. Schließlich erfolgt ein Entformen des Wischblatts 2 aus dem Spritzgießwerkzeug 40, siehe Block 83. Die Prozedur endet in einem Block 84.

Gemäß noch weiteren Ausführungsformen, welche mit hierin beschriebenen Ausführungsformen kombiniert werden können, kann das Spritzgießen des Wischblatts 2 unter Verwendung von plastifiziertem Kunststoff durchgeführt werden. Auf diese Weise wird eine besonders kostengünstige Herstellung des Wischblatts ermöglicht.

Gemäß noch weiteren Ausführungsformen kann das Oberteil 10 und/oder das Unterteil 12 und/oder eines oder mehrere Verbindungselemente 18 ein Material enthalten, welches aus der Gruppe gewählt ist, welche besteht aus einem Polymethylmethacrylat, einem Polymer, einem Faserverbundwerkstoff, Carbon, POM, PA, TPE (Thermoplastischem Elastomer), insbesondere TPE-S, TPE-O, TPE-U, TPE-A, TPE-V, TPE-E,..., oder jedweder Kombination davon. Auf diese Weise wird der Vorteil erzielt, dass durch eine geeignete Materialauswahl physikalische, wie etwa mechanische Eigenschaften des Wischarms 1 bzw. von Komponenten des Wischblatts 2 angepasst werden können. Ferner ist es möglich, Komponenten des Wischarms 1 wie etwa den Wischblattkopf 70 oder das Wischblatt 2 als integrale Bauteile in Spritzguss auszuführen, wodurch fertigungstechnische Vorteile erzielt werden, die eine kostengünstige Herstellung der Scheibenwischvorrichtung zulassen. Insbesondere ist es vorteilhaft, wenn der Wischblattkopf 70 zusammen mit dem Wischblatt 2 als ein integrales Bauteil in Spritzguss ausgeführt wird.

Im Folgenden werden Aspekte einer beispielhaften Scheibenwischvorrichtung beschrieben, für welche die hierin beschriebenen Ausführungsformen der Scheibenwischvorrichtung, insbesondere die Anordnung der Verbindungselemente 18 des Wischblatts 2 besonders vorteilhaft sind. Zur Bereitstellung des unter Bezugnahme auf die Figuren 5A, 5B, 6 und 7 untenstehend näher erläuterten "Finray" -Effekts sind vor allem die Verbindungselemente 18 beweglich um einen zugehörigen Verbindungspunkt 20 ausgelegt, um eine Bewegung des Oberteils 10 und des Unterteils 12 relativ zueinander mit einer Bewegungskomponente entlang der Längserstreckung 8 des Wischblatts 2 zu ermöglichen.

Figuren 5A und 5B zeigen schematische Darstellungen eines Wischblatts 2 in einer Grundstellung und in einer an eine Scheibe angelegten Stellung gemäß Ausführungsformen der Scheibenwischvorrichtung der Offenbarung. Es werden hier Fin-Ray-Wischer beschrieben, für die die Anordnung der Verbindungselemente 18 des Wischblatts 2 gemäß der hier beschriebenen Ausführungsformen besonders nützlich ist. Diese Anordnung der Verbindungselemente 18 ist in den Figuren 5A, 5B, 6 und 7 nicht erneut dargestellt und kann auch in diesen Ausführungsformen wie zuvor beschrieben zur Verfügung gestellt werden. Das Wischblatt 2 dient zum Wischen der Scheibe 4 eines Fahrzeugs, das zum Beispiel ein Kraftfahrzeug ist, insbesondere ein Auto. Das Wischblatt 2 hat eine Längserstreckung 8 und weist ein langgestrecktes Oberteil 10 und ein ebenfalls langgestrecktes Unterteil 12 auf. Die Längserstreckungen 8 des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein. Es ist ebenso möglich, nur jeweils einen Teil des Oberteils 10 und/oder des Unterteils 12 biegbar auszugestalten. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit.

Das Oberteil 10 und das Unterteil 12 sind an einem wischblattseitigen Befestigungsteil 30 befestigt. Die Scheibenwischvorrichtung kann mittels des wischblattseitigen Befestigungsteils 30, zum Beispiel mit einer Quickfix-Befestigung, am Fahrzeug bzw. mit der Antriebswelle 33 einer Scheibenwischer-Antriebseinheit 32 (Wischermotor) des Fahrzeugs verbunden werden. Eine derartige Quickfix-Befestigung kann die Antriebswelle 33 der Scheibenwischvorrichtung mit dem Wischarm 1 schnell lösbar verbinden.

An der Seite, die dem Befestigungsteil 30 entlang der Längserstreckung 8 der Scheibenwischvorrichtung gegenüberliegt, ist das Oberteil 10 und das Unterteil 12 an der Verbindungsposition 34 verbunden. Das Oberteil 10 und das Unterteil 12 sind durch Verbindungselemente 18 miteinander verbunden. Die Verbindungselemente 18 sind derart ausgestaltet, dass sich der Abstand der Verbindungsposition mit dem Oberteil 10 und der Abstand der Verbindungsposition mit dem Unterteil 12 um maximal +/- 1 mm ändert, insbesondere um maximal +/- 0,3 mm ändert (zum Beispiel durch Wärmeausdehnung und/oder Zug und Druckbelastung). Die Verbindungselemente 18 können somit im Wesentlichen nicht elastisch ausgebildet bzw. der Effekt der Verbindungselemente 18 beruht auf deren Kraftübertragung zwischen Oberteil 10 und Unterteil 12 und nicht auf deren Elastizität.

Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk 20 aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen die Gelenke 20 durch Filmscharniere zur Verfügung gestellt sind, stellen somit eine sehr einfache Art und Weise zur Verfügung, um die Gelenke 20 für einen Fin-Ray-Wischer zur Verfügung zu stellen. Das Wischblatt 2 kann einteilig, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung 8 des Wischblatts 2 voneinander beabstandet. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils 12, und eine gute Anpassung an die Krümmung und Krümmungsänderungen der zu wischenden Scheibe 4 gewährleistet werden.

Figur 5B zeigt eine schematische Darstellung des Wischblatts 2 nach Figur 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen findet bei einer Krafteinwirkung auf das Unterteil 12 (durch die Scheibe 4) eine Biegung des Unterteils 12 in die Richtung statt, aus der die Kraft wirkt. Dies ist durch die Verbindung des Oberteils 10 und des Unterteils 12 an der Verbindungsposition 34, die Form, und durch Drehgelenke 20 an der Verbindung zwischen den Verbindungselementen 18 und dem Ober- bzw. Unterteil gegeben. Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Finray"-Prinzip bezeichnet. Dadurch hat eine Scheibenwischvorrichtung gemäß den hierin beschriebenen Ausführungsformen den Vorteil einer verbesserten Anpassung an eine Scheibe 4 eines Kraftfahrzeugs. Bei einem herkömmlichen Scheibenwischblatt ist dessen Oberteil üblicherweise starr, d. h. es ist nicht biegbar ausgebildet.

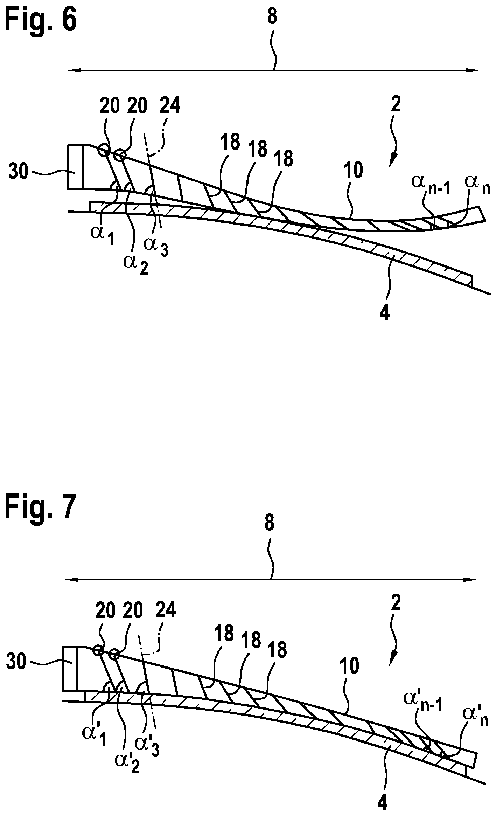

Figuren 6 und 7 zeigen schematische Darstellungen eines Wischblatts 2 einer Scheibenwischvorrichtung für ein Fahrzeug, insbesondere für ein Kraftfahrzeug, in einer Grundstellung (Figur 6), d.h. in einem unbelastetem Zustand, und in einer an eine Scheibe 4 angelegten Stellung (Figur 7) gemäß den hierein beschrieben Ausführungsformen. Das Wischblatt 2 umfasst ein langgestrecktes Oberteil 10 und ein langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang der Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang der Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang der Längserstreckung 8 des Wischblatts 2 verändert, insbesondere stetig verändert bzw. monoton oder streng monoton verändert.

In dem in Figur 6 dargestellten Wischblatt 2 im unbelastetem Zustand sind die Winkel αₙ der jeweiligen Längsachsen 24 der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts 2, d.h. in einer an die Scheibe 4 angelegten Stellung, wie sie beispielhaft in Figur 7 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen, sind die Winkel αₙ der jeweiligen Längsachsen 24 der Verbindungselemente 18 relativ zum Unterteil 12, die sich entlang der Längserstreckung 8 des Wischblatts 2 ändern, in dem in Figur 7 dargestellten Wischblatt, welches sich in einer an die Scheibe angelegten Position befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt 2 zumindest einen ersten Bereich auf, in dem der Winkel αₙ der Längsachsen 24 der Verbindungselemente 18 relativ zum Unterteil 12 entlang der Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 6 und 7 dargestellt, ist der zweite Bereich des Wischblatts 2, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, an einer inneren Position des Wischblatts angeordnet, welche sich in der Nähe des Befestigungsteils 30 des Wischblatts 2 befindet. Dadurch kann eine Scheibenwischvorrichtung zur Verfügung gestellt werden, welche eine besonders gute Anpassung an die Krümmung einer Scheibe 4 ermöglicht. Ferner kann ein weitgehend gleichmäßiger Anpressdruck der Scheibenwischvorrichtung auf der Scheibe 4 als auch eine homogene Kraftverteilung der Scheibenwischvorrichtung bereitgestellt werden, so dass eine hohe Wischqualität bereitgestellt wird.

Gemäß Ausführungsformen des Wischblatts 2, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln αₙ zum Unterteil 12 verlaufen, die zwischen einem unteren Winkelgrenzwert αₙᵤ und einem oberen Grenzwert αₙₒ liegen. Gemäß Ausführungsformen ist der untere Winkelgrenzwert αₙᵤ = 10°, insbesondere αₙᵤ = 15°, insbesondere αₙᵤ = 20° und der obere Winkelgrenzwert αₙₒ = 80°, insbesondere αₙₒ = 90°, insbesondere αₙₒ = 100°. Dies gewährleistet vorteilhafterweise eine besonders gute Übertragung einer auf das Unterteil 12 wirkenden Kraft auf das Oberteil 10.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang der Längserstreckung 8 des Wischblatts 2 verändert, insbesondere in einem ersten Bereich stetig verkleinert und in einem zweiten Bereich stetig vergrößert. Der Abstand zwischen dem Oberteil 10 und dem Unterteil 12 entlang der Längserstreckung 8 des Wischblatts 2 kann auch einen Bereich umfassen, in welchem der Abstand zwischen dem Oberteil 10 und dem Unterteil 12 entlang der Längserstreckung 8 des Wischblatts 2 im Wesentlichen konstant ist. Der Abstand zwischen dem Oberteil 10 und dem Unterteil 12 ist am Befestigungsteil 30 größer als am gegenüberliegenden Ende, an welchem sich die Verbindungsposition 34 befindet.

Gemäß Ausführungsformen des Wischblatts 2, welche mit anderen Ausführungsformen kombiniert werden können, beträgt der innere (dem Befestigungsteil zugewandte) Abstandswert mindestens 15 mm, insbesondere mindestens 25 mm, insbesondere mindestens 35 mm. Gemäß Ausführungsformen, welche mit anderen Ausführungsformen kombiniert werden können, beträgt der äußere Abstandswert mindestens 10 mm, insbesondere mindestens 12,5 mm, insbesondere mindestens 15 mm. Gemäß Ausführungsformen, welche mit anderen Ausführungsformen kombiniert werden können, beträgt der mittlere Abstandswert mindestens 7,5 mm, insbesondere mindestens 9 mm, insbesondere mindestens 12,5 mm.

Wie in den Figuren 6 bis 7 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung.

Gemäß Ausführungsformen des Wischblatts, welche mit anderen hierin beschriebenen Ausführungsformen kombiniert werden können, umfasst das Wischblatt einen ersten Bereich mit einer ersten Krümmung ω<0 und einen zweiten Bereich mit einer zweiten Krümmung ω>0. Ferner kann das Wischblatt gemäß Ausführungsformen einen dritten Bereich mit einer dritten Krümmung ω<0 aufweisen, wobei der zweite Bereich des Wischblatts mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Figur 6 gezeigt ist. Somit kann eine Scheibenwischvorrichtung zur Verfügung gestellt werden mit welcher ein weitgehend gleichmäßiger Anpressdruck auf die Scheibe 4 realisiert werden kann. Ferner kann eine Scheibenwischvorrichtung bereitgestellt werden, welche eine verbesserte Anpassung an die Scheibe 4 und eine hohe Wischqualität aufweist.

Gemäß weiteren Ausführungsformen kann zusätzlich zu einem für Fin-Ray-Wischer verwendbaren Quickfix-Befestigungsverschluss, bei dem die gesamte Scheibenwischvorrichtung von der Antriebswelle 33 am Fahrzeug entfernt wird, ein Mechanismus zur Verfügung gestellt werden, um das Wischblatt 2 einer Scheibenwischvorrichtung von der Scheibe 4 abzuheben bzw. auf diese aufzusetzen. Dies vereinfacht weiter die Benutzung, zum Beispiel für eine manuelle Reinigung der Scheibe 4.

## Patentansprüche

1. Scheibenwischvorrichtung, geeignet zum Wischen einer Scheibe (4) eines Fahrzeugs, insbesondere eines Kraftfahrzeugs, umfassend einen Wischarm (1) mit einem Wischblattkopf (70) und einem Wischblatt (2), welches umfasst:
- ein langgestrecktes Oberteil (10), das zumindest teilweise biegbar ausgestaltet ist,
- ein langgestrecktes Unterteil (12), das zumindest teilweise biegbar ausgestaltet ist, und
- mehrere Verbindungselemente (18) zum Verbinden des Oberteils (10) und des Unterteils (12), wobei die Verbindungselemente (18) entlang einer Längserstreckung (8) des Wischblatts (2) voneinander beabstandet und an dem Oberteil (10) und/oder an dem Unterteil (12) mittels eines Drehgelenks (20) angebracht sind, insbesondere wobei die Verbindungselemente (18) ausgelegt sind, um eine Bewegung des Oberteils (10) und des Unterteils (12) relativ zueinander mit einer Bewegungskomponente entlang der Längserstreckung (8) des Wischblatts (2) zu ermöglichen,
wobei sich die Verbindungselemente (18) jeweils entlang einer Längsachse (24) des Verbindungselements (18), welche von dem Oberteil (10) zu dem Unterteil (12) verläuft, und jeweils entlang einer zu der Längsachse (24) senkrecht verlaufenden Querachse (25) erstrecken, wobei die Querachsen (25) von mindestens zwei entlang der Längserstreckung (8) benachbarten Verbindungselementen (18) zueinander einen Entformwinkel (β) von mindestens 0,5° einschließen.

2. Scheibenwischvorrichtung nach Anspruch 1, wobei der Entformwinkel (β) einen Wert in einem Bereich von 0,5° bis 45°, in typischer Weise einen Wert in einem Bereich von 1° und 10°, und insbesondere einen Wert von ungefähr 3° aufweist.

3. Scheibenwischvorrichtung nach Anspruch 1 oder 2, wobei die Verbindungselemente (18) zwischen dem Oberteil (10) und dem Unterteil (12) entlang der Längserstreckung (8) des Wischblatts (2) derart angeordnet sind, dass aufeinanderfolgende Verbindungselemente (18) um ihre jeweiligen Längsachsen (24) abwechselnd zum Wischblattkopf (70) hin und von diesem weg verschwenkt sind.

4. Scheibenwischvorrichtung nach Anspruch 3, wobei die Verbindungselemente (18) zwischen dem Oberteil (10) und dem Unterteil (12) entlang der Längserstreckung (8) des Wischblatts (2) derart wechselweise um ihre Längsachsen (24) verschwenkt sind, dass ein konstanter Entformwinkel (β) zwischen den Querachsen (25) benachbarter Verbindungselemente (18) bereitgestellt ist.

5. Scheibenwischvorrichtung nach einem der Ansprüche 1 bis 4, wobei das Oberteil (10) und/oder das Unterteil (12) und/oder eines oder mehrere Verbindungselemente (18) ein Material enthalten, welches aus der Gruppe gewählt ist, welche besteht aus einem Polymethylmethacrylat, einem Polymer, einem Faserverbundwerkstoff, Carbon, POM, PA, TPE, insbesondere TPE-S, TPE-O, TPE-U, TPE-A, TPE-V, TPE-E,..., oder jedweder Kombination davon.

6. Scheibenwischvorrichtung nach einem der Ansprüche 1 bis 5, wobei der Wischblattkopf (70) zusammen mit dem Wischblatt (2) als ein integrales Bauteil in Spritzguss ausgeführt ist.

7. Scheibenwischvorrichtung nach einem der Ansprüche 1 bis 6, wobei die Verbindungselemente (18) und/oder die Drehgelenke (20) eine nahezu konstante Wandstärke (19) aufweisen, wobei die Wandstärke (19) in einem Bereich zwischen 0,3 mm und 5 mm, insbesondere wobei die Wandstärke der Drehgelenke in einem Bereich zwischen 0,2 mm und 1 mm, und insbesondere wobei die Wandstärke der Verbindungselemente in einem Bereich von 1 mm bis 5 mm liegt.

8. Verfahren zur Herstellung eines Wischblatts (2) für eine Scheibenwischvorrichtung, wobei das Verfahren umfasst:
- Bereitstellen eines Spritzgießwerkzeugs (40), geeignet zum Spritzgießen des Wischblatts (2), wobei das Wischblatt (2) ein langgestrecktes Oberteil (10), ein langgestrecktes Unterteil (12) und mehrere Verbindungselemente (18) zum Verbinden des Oberteils (10) und des Unterteils (12) aufweist, wobei die Verbindungselemente (18) entlang einer Längserstreckung (8) des Wischblatts (2) voneinander beabstandet und an dem Oberteil (10) und/oder an dem Unterteil (12) mittels eines Drehgelenks (20) angebracht sind, wobei die Verbindungselemente (18) jeweils entlang einer Längsachse (24) des Verbindungselements (18), welche von dem Oberteil (10) zu dem Unterteil (12) verläuft, und entlang einer zu der Längsachse (24) senkrecht verlaufenden Querachse (25) ausgedehnt sind, wobei die Querachsen (25) von mindestens zwei entlang der Längserstreckung (8) benachbarten Verbindungselementen (18) zueinander einen Entformwinkel (β) von mindestens 0,5° einschließen;
- Spritzgießen des Wischblatts (2) unter Verwendung des mit dem Entformwinkel (β) versehenen Spritzgießwerkzeugs (40); und
- Entformen des Wischblatts (2) aus dem Spritzgießwerkzeug (40).

9. Verfahren nach Anspruch 8, wobei das Spritzgießen des Wischblatts (2) unter Verwendung von plastifiziertem Kunststoff durchgeführt wird.

10. Verfahren nach Anspruch 8 oder 9, wobei das Spritzgießen des Wischblatts (2) mit einem Spritzgießwerkzeug (40) durchgeführt wird, welches trapezoide Entformblöcke (41, 42) aufweist.

## Claims

1. Windshield wiper device suitable for wiping a windshield (4) of a vehicle, in particular of a motor vehicle, comprising a wiper arm (1) with a wiper blade head (70) and a wiper blade (2) which comprises:
- an elongate upper part (10), which is configured to be at least partially bendable,
- an elongate lower part (12), which is configured to be at least partially bendable, and
- a plurality of connecting elements (18) for connecting the upper part (10) and the lower part (12), wherein the connecting elements (18) are spaced apart from one another along a longitudinal extent (8) of the wiper blade (2) and are attached to the upper part (10) and/or to the lower part (12) by means of a rotary joint (20), in particular wherein the connecting element (18) are designed in order to permit a movement of the upper part (10) and of the lower part (12) relative to each other with a movement component along the longitudinal extent (8) of the wiper blade (2),
wherein the connecting elements (18) each extend along a longitudinal axis (24) of the connecting element (18), which longitudinal axis runs from the upper part (10) to the lower part (12), and each extend along a transverse axis (25) running perpendicularly to the longitudinal axis (24), wherein the transverse axes (25) of at least two connecting elements (18) which are adjacent along the longitudinal extent (8) enclose a demolding angle (β) of at least 0.5° with respect to each other.

2. Windshield wiper device according to Claim 1, wherein the demolding angle (β) has a value within a range of 0.5° to 45°, typically a value within a range of 1° and 10°, and in particular a value of approximately 3°.

3. Windshield wiper device according to Claim 1 or 2, wherein the connecting elements (18) between the upper part (10) and the lower part (12) along the longitudinal extent (8) of the wiper blade (2) are arranged in such a manner that consecutive connecting elements (18) are pivoted about their respective longitudinal axes (24) toward the wiper blade head (70) and away from the latter in an alternating manner.

4. Windshield wiper device according to Claim 3, wherein the connecting elements (18) between the upper part (10) and the lower part (12) along the longitudinal extent (8) of the wiper blade (2) are pivoted alternately about their longitudinal axes (24) in such a manner that a constant demolding angle (β) is provided between the transverse axes (25) of adjacent connecting elements (18).

5. Windshield wiper device according to one of Claims 1 to 4, wherein the upper part (10) and/or the lower part (12) and/or one or more connecting elements (18) contain a material which is selected from the group which consists of a polymethylmethacrylate, a polymer, a fiber composite material, carbon, POM, PA, TPE, in particular TPE-S, TPE-O, TPE-U, TPE-A, TPE-V, TPE-E, ..., or any combination thereof.

6. Windshield wiper device according to one of Claims 1 to 5, wherein the wiper blade head (70) together with the wiper blade (2) is realized as an integral component by injection molding.

7. Windshield wiper device according to one of Claims 1 to 6, wherein the connecting elements (18) and/or the rotary joints (20) have a virtually constant wall thickness (19), wherein the wall thickness (19) lies within a range of between 0.3 mm and 5 mm, in particular wherein the wall thickness of the rotary joints lies within a range of between 0.2 mm and 1 mm, and in particular wherein the wall thickness of the connecting elements lies within a range of 1 mm to 5 mm.

8. Method for producing a wiper blade (2) for a windshield wiper device, wherein the method comprises:
- providing an injection molding die (40) suitable for the injection molding of the wiper blade (2), wherein the wiper blade (2) has an elongate upper part (10), an elongate lower part (12) and a plurality of connecting elements (18) for connecting the upper part (10) and the lower part (12), wherein the connecting elements (18) are spaced apart from one another along a longitudinal extent (8) of the wiper blade (2) and are attached to the upper part (10) and/or to the lower part (12) by means of a rotary joint (20), wherein the connecting elements (18) are each extended along a longitudinal axis (24) of the connecting element (18), which longitudinal axis runs from the upper part (10) to the lower part (12), and along a transverse axis (25) running perpendicularly to the longitudinal axis (24), wherein the transverse axes (25) of at least two connecting elements (18) which are adjacent along the longitudinal extent (8) enclose a demolding angle (β) of at least 0.5° with respect to each other;
- injection molding the wiper blade (2) using the injection molding die (40) provided with the demolding angle (β); and
- demolding the wiper blade (2) from the injection molding die (40).

9. Method according to Claim 8, wherein the injection molding of the wiper blade (2) is carried out using plasticized plastic.

10. Method according to Claim 8 or 9, wherein the injection molding of the wiper blade (2) is carried out with an injection molding die (40) which has trapezoidal demolding blocks (41, 42).

## Revendications

1. Dispositif essuie-glace, adapté pour essuyer une vitre (4) d'un véhicule, notamment d'un véhicule automobile, comprenant un porte-balais (1) muni d'une tête de raclette (70) et d'une raclette (2), laquelle comporte :
- une partie supérieure (10) étendue en longueur, laquelle est réalisée au moins partiellement de manière flexible,
- une partie inférieure (12) étendue en longueur, laquelle est réalisée au moins partiellement de manière flexible, et
- plusieurs éléments de liaison (18) destinés à relier la partie supérieure (10) et la partie inférieure (12), les éléments de liaison (18) étant espacés les uns des autres le long d'une extension en longueur (8) de la raclette (2) et étant montés au niveau de la partie supérieure (10) et/ou au niveau de la partie inférieure (12) au moyen d'une articulation tournante (20), les éléments de liaison (18) étant notamment conçus pour rendre possible un mouvement de la partie supérieure (10) et de la partie inférieure (12) l'une par rapport à l'autre avec une composante de mouvement le long de l'extension en longueur (8) de la raclette (2),
les éléments de liaison (18) s'étendant respectivement le long d'un axe longitudinal (24) de l'élément de liaison (18), lequel s'étend de la partie supérieure (10) à la partie inférieure (12), et respectivement le long d'un axe transversal (25) qui s'étend perpendiculairement à l'axe longitudinal (24), les axes transversaux (25) d'au moins deux éléments de liaison (18) adjacents le long de l'extension en longueur (8) formant entre eux un angle de dépouille (β) d'au moins 0,5°.

2. Dispositif essuie-glace selon la revendication 1, l'angle de dépouille (β) présentant une valeur dans une plage de 0,5° à 45°, généralement une valeur dans une plage de 1° à 10°, et notamment une valeur d'environ 3°.

3. Dispositif essuie-glace selon la revendication 1 ou 2, les éléments de liaison (18) étant disposés entre la partie supérieure (10) et la partie inférieure (12) le long de l'extension en longueur (8) de la raclette (2) de telle sorte que les éléments de liaison (18) successifs sont pivotés autour de leurs axes longitudinaux (24) respectifs en alternance vers la tête de raclette (70) et à l'écart de celle-ci.

4. Dispositif essuie-glace selon la revendication 3, les éléments de liaison (18) entre la partie supérieure (10) et la partie inférieure (12) le long de l'extension en longueur (8) de la raclette (2) étant pivotés en alternance autour de leurs axes longitudinaux (24) de telle sorte qu'un angle de dépouille (β) constant est fourni entre les axes transversaux (25) des éléments de liaison (18) adjacents.

5. Dispositif essuie-glace selon l'une des revendications 1 à 4, la partie supérieure (10) et/ou la partie inférieure (12) et/ou un ou plusieurs éléments de liaison (18) contenant un matériau qui est choisi dans le groupe composé d'un polyméthacrylate de méthyle, d'un polymère, d'un matériau composite à base de fibres, de carbone, de POM, de PA, de TPE, notamment de TPE-S, TPE-O, TPE-U, TPE-A, TPE-V, TPE-E, ... ou de toute combinaison de ceux-ci.

6. bispositif essuie-glace selon l'une des revendications 1 à 5, la tête de raclette (70) conjointement avec la raclette (2) étant réalisée sous la forme d'un élément structural intégré moulé par injection.

7. Dispositif essuie-glace selon l'une des revendications 1 à 6, les éléments de liaison (18) et/ou les articulations tournantes (20) possédant une épaisseur de paroi (19) quasiment constante, l'épaisseur de paroi (19) se trouvant dans une plage entre 0,3 mm et 5 mm, l'épaisseur de paroi des articulations tournantes se trouvant notamment dans une plage entre 0,2 mm et 1 mm, et l'épaisseur de paroi des éléments de liaison se trouvant notamment dans une plage de 1 mm à 5 mm.

8. Procédé de fabrication d'une raclette (2) pour un dispositif essuie-glace, le procédé comprenant :
- la fourniture d'un outil de moulage par injection (40), adapté pour mouler par injection la raclette (2), la raclette (2) possédant une partie supérieure (10) étendue en longueur, une partie inférieure (12) étendue en longueur et plusieurs éléments de liaison (18) destinés à relier la partie supérieure (10) et la partie inférieure (12), les éléments de liaison (18) étant espacés les uns des autres le long d'une extension en longueur (8) de la raclette (2) et étant montés au niveau de la partie supérieure (10) et/ou au niveau de la partie inférieure (12) au moyen d'une articulation tournante (20), les éléments de liaison (18) s'étendant respectivement le long d'un axe longitudinal (24) de l'élément de liaison (18), lequel s'étend de la partie supérieure (10) à la partie inférieure (12), et le long d'un axe transversal (25) qui s'étend perpendiculairement à l'axe longitudinal (24), les axes transversaux (25) d'au moins deux éléments de liaison (18) adjacents le long de l'extension en longueur (8) formant entre eux un angle de dépouille (β) d'au moins 0,5° ;
- le moulage par injection de la raclette (2) en utilisant l'outil de moulage par injection (40) pourvu de l'angle de dépouille (β) ; et
- le démoulage de la raclette (2) hors de l'outil de moulage par injection (40).

9. Procédé selon la revendication 8, le moulage par injection de la raclette (2) étant réalisé en utilisant une matière plastique plastifiée.

10. Procédé selon la revendication 8 ou 9, le moulage par injection de la raclette (2) étant réalisé avec un outil de moulage par injection (40) qui présente des blocs de dépouille (41, 42) trapézoïdaux.
